# FASCICULE DE BREVET EUROPEEN

(11) **EP 4 308 397 B1**
(45) Date de publication et mention de la délivrance du brevet: **16.09.2026**
(21) Numéro de dépôt: 22709352.3
(22) Date de dépôt: 01.02.2022
(51) Int. Cl.: B60K 1/04, B62D 21/15, B60K 1/00, B62D 25/20

(54) **STRUCTURE DE VEHICULE INTEGRANT UN MODULE DE BATTERIE ET UNE PLAQUE DE REFROIDISSEMENT**
FAHRZEUGSTRUKTUR MIT BATTERIEMODUL UND KÜHLPLATTE
VEHICLE STRUCTURE INCORPORATING A BATTERY MODULE AND A COOLING PLATE

(30) Priorité: 18.03.2021 FR 2102724
(43) Date de publication de la demande: 24.01.2024
(73) Titulaire: Stellantis Auto SAS, 78300 Poissy (FR)
(72) Inventeur: KRSTIC, Dragan, 90400 DANJOUTIN (FR); FRESCAL, Nicolas, 78000 VERSAILLES (FR); DELAYE, Arnaud, 78100 ST GERMAIN EN LAYE (FR); LOCHE, Denis, 91220 BRETIGNY SUR ORGE (FR)
(74) Mandataire: PSIP
(86) Numéro de dépôt international: PCT/FR2022/050181
(87) Numéro de publication internationale: WO 2022/195181

(56) Documents cités:
- DE-A1- 102017 004 162
- DE-A1- 102017 117 696
- DE-B3- 102019 133 496
- FR-A1- 3 088 051
- FR-A1- 3 089 465

## Description

La présente invention revendique la priorité de la demande française N°2102724 déposée le 18.03.2021.

L'invention concerne les véhicules à motricité électrique comprenant une structure de caisse abritant un habitacle et comprenant un plancher délimitant une partie basse de cet habitacle, ce véhicule comprenant une machine motrice électrique et une batterie sous le plancher alimentant cette machine motrice.

L'invention concerne en particulier un agencement de cette batterie avec ce plancher.

On comprendra par batterie, dans tout le texte de ce document, un ensemble comprenant au moins un module de batterie contenant au moins une cellule électrochimique.

Cette batterie comprend éventuellement des moyens électriques ou électroniques pour la gestion d'énergie électrique de ce au moins un module. Quand il y a plusieurs modules, ils sont généralement regroupés dans un bac ou carter et forment alors un bloc batteries, ce bloc batteries étant souvent désigné par l'expression anglaise « pack batteries », ce carter contenant généralement une interface de montage, et des bornes de raccordement et formant un espace hermétique autour des modules en les enfermant entre un fond et un couvercle. Cette batterie comprend en outre un moyen de refroidissement du module, par exemple un refroidisseur en forme de plaque insérée entre le fond du module et le fond du carter, ou tout autre moyen. Cette batterie est généralement fixée par boulonnage à la structure de caisse, par exemple sous le plancher du véhicule.

Par ailleurs, on comprendra par cellule électrochimique dans tout le texte de ce document, des cellules générant du courant par réaction chimique, par exemple de type lithium-ion (ou Li-ion), de type Ni-Mh, ou Ni-Cd ou plomb ou encore les piles à combustible.

Cette batterie est lourde, encombrante, difficile à manipuler et à assembler sur la structure d'un véhicule, et nécessites de nombreux renforts à l'intérieur du carter pour rigidifier le plancher et la structure du véhicule sous laquelle elle est montée. Sa fixation à la structure de caisse doit également pouvoir transmettre des efforts importants en cas d'accident du véhicule.

Cette batterie est en outre exposée aux chocs provenant du dessous du véhicule car relativement proche du sol.

Ce dernier aspect implique que les éléments sensibles aux chocs de la batterie, par exemple les modules et le moyen de refroidissement, soient suffisamment éloignés du sol et protégés contre ce type de choc par le fond du carter de la batterie. Mais cet éloignement n'est pas sans conséquences sur le dimensionnement de l'habitacle du véhicule, puisque soit il le réduit, soit le véhicule est globalement plus haut.

Dans ce domaine, on connait du document de brevet US-A1-5501289 une structure de plancher d'un véhicule à propulsion électrique, ce plancher comprenant une partie supérieure, et une partie inférieure dans laquelle sont logés les modules de batterie. Cette partie inférieure est boulonnée directement contre la partie supérieure du plancher. L'habitacle se situe au-dessus de la partie supérieure du plancher.

Cette structure de plancher permet de fixer directement, c'est-à-dire sans passer par des fixations intermédiaires du carter de la batterie sur la structure, des traverses ou poutres de rigidification de la structure du véhicule sur la partie inférieure du plancher, et donc d'avoir un plancher très rigide remplaçant complétement le carter de la batterie précédemment introduit.

DE 10 2017 117696 A1 divulgue une structure de plancher alternative qui intègre des moyens de stockage d'énergie électrique et des moyens de refroidissement.

Malheureusement cette structure de plancher présente un inconvénient principal, par le fait que l'encombrement en hauteur de la batterie reste important : les modules reposent sur leur fond, et ont besoin de beaucoup de place sur leur dessus pour laisser passer de l'air de refroidissement, ainsi que les connectiques électriques. Ainsi ce plancher oblige à avoir un habitacle assez haut, ce qui n'est pas favorable, par exemple, à la tenue de route, mais également à l'économie d'énergie puisque la trainée du véhicule dans l'air sera augmentée.

Un inconvénient secondaire est que le fond des modules est directement exposé aux chocs provenant du dessous du véhicule, en restant proche du sol, ce qui nécessite une partie inférieure du plancher très robuste et donc lourde et on retrouve la problématique de la difficulté à manipuler et à assembler ce sous-ensemble (modules + partie inférieure) sur ou, plus précisément, sous la structure du véhicule.

Le but de l'invention est de remédier au moins à cet inconvénient principal en proposant un dispositif ...

A cet effet, l'invention a pour objet une structure de véhicule automobile comprenant :
- un plancher comprenant une tôle ayant une face inférieure, et une face opposée supérieure destinée à être orientée vers un habitacle du véhicule,
- un module de batterie pour le stockage d'énergie électrique comprenant une face d'appui,
- un moyen de refroidissement du module,
ce module étant positionné entre la face inférieure et ce moyen de refroidissement, cette structure comprenant un moyen de fixation fixant le module de batterie au plancher, la face d'appui étant plaquée contre la face inférieure de la tôle et en contact sur cette face inférieure.

Ainsi le module est éloigné de la surface de roulage du véhicule en étant directement en contact avec le plancher. Ce plancher n'a pas besoin d'être surélevé, l'habitacle reste à sa hauteur initiale, c'est le module qui est remonté contre le plancher. Le couvercle du carter du pack batterie tel que présenté précédemment est ainsi remplacé intégralement par le plancher ce qui permet de dégager de la place en hauteur pour remonter le module, tout comme le moyen de refroidissement. En outre, cet éloignement du module et du moyen de refroidissement est bénéfique pour l'absorption des chocs provenant de la surface de roulage, par exemple à cause d'obstacles ou de projectiles décollés de la surface de roulage par des roues du véhicule.

La chaleur émise par le module lors de son fonctionnement est dissipée par le plancher par conduction thermique, et/ou par le moyen de refroidissement également par conduction thermique. On notera que, de façon à améliorer cette conduction thermique, on pourra insérer une pâte thermo-conductrice ou un élément déformable thermoconducteur entre la face inférieure et la face d'appui, et/ou entre le moyen de refroidissement et le module, de sorte qu'aucun vide d'air ne s'interpose entre le module et le plancher ou entre le module et le moyen de refroidissement, favorisant ainsi la conduction thermique sur toute la surface d'appui et/ou du moyen de refroidissement.

Selon un mode de réalisation de l'invention, ce plancher comprend une poutre fixée, au moins sur une partie de sa longueur, directement sur la face inférieure.

Cette poutre remplace les traverses ou renforts du carter du pack batterie tel que présenté précédemment. Le plancher remplace le couvercle de ce carter, et la ou les poutres fixées directement au plancher permettent un bien meilleur rigidification de la structure puisqu'il n'y a plus aucun effort, ou choc, devant passer par des fixations rapportées, par exemple boulonnées telles que réalisées jusqu'à ce jour.

Selon un mode de réalisation de l'invention, cette structure de véhicule comprend un longeron fixé directement sur la face inférieure et formant avec la poutre et la tôle une alvéole logeant le module de batterie.

Ainsi ce module est parfaitement protégé par la poutre et le longeron vis-à-vis des chocs extérieurs latéraux au véhicule, selon un axe transversal Y au véhicule. De plus, cette structure alvéolaire apporte une rigidité maximale à tout le véhicule, de sorte qu'il n'est plus nécessaire d'associer le moindre renfort au module. Ainsi, s'il y a plusieurs modules, chaque module peut alors être introduit dans une alvéole, indépendamment des autres modules.

On notera que cette alvéole peut en outre loger le moyen de refroidissement qui se trouve alors protégé de la même façon que le module.

Selon un mode de réalisation de l'invention, la poutre est une traverse transversale au longeron et fixée à une de ses extrémités directement au longeron.

Selon un mode de réalisation de l'invention, cette structure de véhicule comprend une plaque de carénage distante moyen de refroidissement et recouvrant ce moyen de refroidissement et une face du module opposée à la première face, cette plaque de carénage étant fixée directement ou indirectement au plancher de façon étanche.

On comprendra par plaque de carénage, dans tout le texte de ce document, une plaque agencée de sorte à :
- faciliter l'écoulement d'un flux d'air provoqué par la vitesse du véhicule en marche, en évitant des pertes de charge aérodynamiques dues au franchissement d'obstacles à son écoulement, ces obstacles étant des éléments du véhicule, notamment des organes de batterie, moteur, structure de caisse, transmission, train roulant, et
- protéger ces éléments du véhicule contre des projectiles de la route, par exemple des projections d'eau.

Selon un mode de réalisation de l'invention, la plaque de carénage comprend :
- un enfoncement sur une face inférieure de la plaque de carénage, et
- une goulotte de guidage de faisceaux et/ou de conduites logée dans cet enfoncement.

La face inférieure de la plaque de carénage est en vis-à-vis de la surface de roulage du véhicule, et la hauteur entre cette face inférieure de la plaque de carénage et la surface de roulage constitue la garde au sol du véhicule sous la batterie. Cette garde au sol est avantageusement préservée grâce à l'enfoncement qui permet que la goulotte ne prenne pas sur la garde au sol. Les faisceaux et/ou conduites guidés par la goulotte peuvent avoir une fonction en rapport avec les modules de batterie, mais pas nécessairement, par exemple des conduites de carburant pour un moteur à combustion d'un véhicule à propulsion hybride. Mais avantageusement ces conduites sont des conduite d'un fluide caloporteur circulant dans le moyen de refroidissement, ou des faisceaux en rapport avec le contrôle de la charge ou décharge des modules de batterie.

Selon un mode de réalisation de l'invention, cette plaque de carénage est fixée directement sur une face inférieure de la poutre.

Selon un mode de réalisation de l'invention, cette plaque de carénage est fixée directement sur une face inférieure du longeron.

Selon un mode de réalisation de l'invention, cette structure comprend deux longerons parallèles, la poutre, la tôle et la plaque de carénage, cet ensemble délimitant un espace interne étanche logeant le module et le moyen de refroidissement.

Ainsi cette structure intègre entièrement la fonction du carter du pack batterie tel que présenté précédemment. Ce carter est supprimé.

Les longerons et la ou les poutres assurant avec le plancher la rigidité du véhicule, la plaque de carénage peut être fine et légère, sa résistance mécanique n'étant liée qu'à son aptitude à absorber les chocs provenant de la surface de roulage, par exemple à cause d'obstacles ou de projectiles décollés de la surface de roulage par des roues du véhicule. En outre, comme vu précédemment, grâce à l'invention le module et le moyen de refroidissement sont plus éloignés de la surface de roulage, ce qui laisse plus de possibilité à la plaque de carénage de se déformer sans pour autant atteindre le module ou le moyen de refroidissement.

Selon un mode de réalisation de l'invention, la poutre comprend un premier passage étanche d'un faisceau électrique ou d'une conduite.

Selon un mode de réalisation de l'invention, la plaque de carénage comprend un second passage étanche d'un faisceau électrique ou d'une conduite.

Selon un mode de réalisation de l'invention, le module comprend une borne de raccordement électrique en retrait par rapport à la face du module opposée. Ainsi, par rapport à ce que l'homme du métier a l'habitude de faire, ce module est monté « à l'envers » : la borne de raccordement est orientée vers la surface de roulage. Cette disposition permet, indirectement, d'avoir une grande surface d'appui du module contre le plancher, et donc favorise l'échange thermique entre le module et le plancher si cela est souhaité, et aussi favorise la fixation du module contre le plancher notamment si le module est collé sur cette grande surface, cette colle étant l'un des exemples possibles de réalisation du moyen de fixation fixant le module de batterie au plancher. Le retrait de la borne par rapport à la face du module opposée permet de recouvrir cette face du module opposée par le moyen de refroidissement sans interférence mécanique avec la borne de raccordement, par exemple une plaque de refroidissement plane, tout en permettant un échange thermique par conduction entre cette face du module opposée et ce moyen de refroidissement.

Selon une variante de l'invention, le module comprend une borne de raccordement électrique en retrait de la face d'appui.

Cette disposition permet de privilégier l'échange thermique entre le moyen de refroidissement et le module, au détriment de l'échange thermique entre le plancher et le module et/ou de la surface de collage du module sur la face inférieure, pour reprendre l'exemple du moyen de fixation ci-dessus. Cette disposition permet un éventuel accès à la borne par l'habitacle, par exemple en aménageant une trappe d'accès au travers du plancher.

Selon un mode de réalisation de l'invention, cette structure comprend deux modules et une barre omnibus, cette barre omnibus ayant une forme d'arche reliant électriquement une borne de raccordement du premier module à une borne de raccordement du deuxième module tout en chevauchant la poutre.

Selon un mode de réalisation de l'invention, la poutre est creuse et comprend une ouverture débouchant dans ce creux, le module comprenant un système de sécurité de dégazage en cas d'emballement thermique d'une cellule du module, ce système étant agencé de sorte à diriger le gaz chaud dans le creux de la poutre, au travers de l'ouverture.

Selon un mode de réalisation de l'invention, le moyen de refroidissement est la plaque de refroidissement, plaquée sur le module.

Selon un mode de réalisation de l'invention, la tôle comprend un revêtement thermiquement isolant recouvrant la face inférieure.

Cette disposition permet, si aucun échange thermique entre le plancher et le module n'est pas souhaité, de transformer le plancher en cloison pare-feu.

D'autres particularités et avantages apparaîtront à la lecture de la description ci-après d'un mode particulier de réalisation, non limitatif de l'invention, faite en référence aux figures dans lesquelles :
[Fig 1] : représente une section schématique d'une structure d'un véhicule selon un mode de réalisation de l'invention, dans un repère XYZ orthonormé du véhicule, Z étant l'axe vertical, Y l'axe transversal, et X l'axe longitudinal du véhicule orienté selon un sens de marche avant du véhicule. On notera que cette définition du repère orthonormé WYZ s'applique à tout le texte de ce document.
[Fig 2] : représente une plaque de carénage selon l'invention, vue de « dessous » selon l'axe Z du repère XYZ.
[Fig 3] : représente une section schématique de la plaque de carénage, selon un plan YZ, et divulguant la section de la goulotte.
[Fig 4] représente une section schématique de la plaque de carénage, selon un plan YZ, et de son vissage et/ou collage sur le longeron.
[Fig 5] représente une section schématique d'une structure d'un véhicule selon le mode de réalisation de l'invention de la figure 1, dans le même repère XYZ orthonormé du véhicule mais selon un plan différent.

Il est à garder à l'esprit que les figures sont données à titre d'exemples et ne sont pas limitatives de l'invention. Elles constituent des représentations schématiques de principe destinées à faciliter la compréhension de l'invention et ne sont pas nécessairement à l'échelle des applications pratiques. En outre, dans ce qui va suivre, il est fait référence à toutes les figures prises en combinaison. Quand il est fait référence à une ou des figures spécifiques, ces figures sont à prendre en combinaison avec les autres figures pour la reconnaissance des références numériques désignées. Les références des éléments inchangés ou ayant la même fonction sont communes à toutes les figures, et les variantes de réalisation.

Ces figures divulguent une structure de véhicule automobile comprenant :
- un plancher 1 comprenant une tôle 2 ayant une face inférieure 2i, et une face opposée supérieure 2s destinée à être orientée vers un habitacle 3 du véhicule,
- un module 4 de batterie pour le stockage d'énergie électrique comprenant une face d'appui 5,
- un moyen de refroidissement 13 du module 4.
ce module 4 est positionné entre la face inférieure 2i et ce moyen de refroidissement 13, et cette structure comprend un moyen de fixation 6, 7 fixant le module 4 de batterie au plancher 1, la face d'appui 5 étant plaquée contre la face inférieure 2i de la tôle 2 et en contact sur cette face inférieure 2i.

Cette structure de véhicule forme généralement un habitacle 3, entre le plancher 1 et un pavillon reliés entre eux par des montants, mais pas nécessairement. Cela peut-être la structure d'un véhicule autonome sans passager ni conducteur. L'habitacle 3 se comprendra alors comme la partie de la structure située au-dessus du plancher 1.

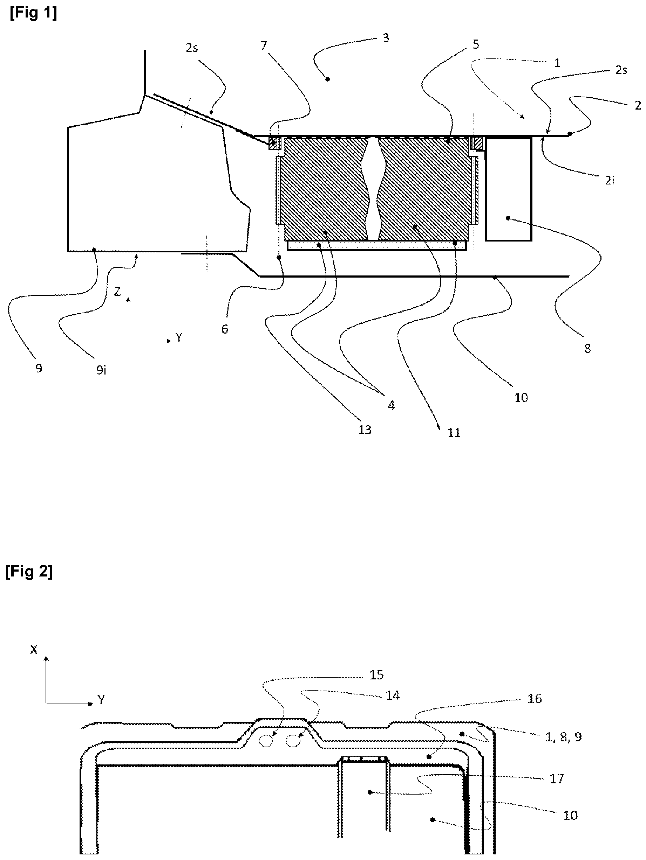

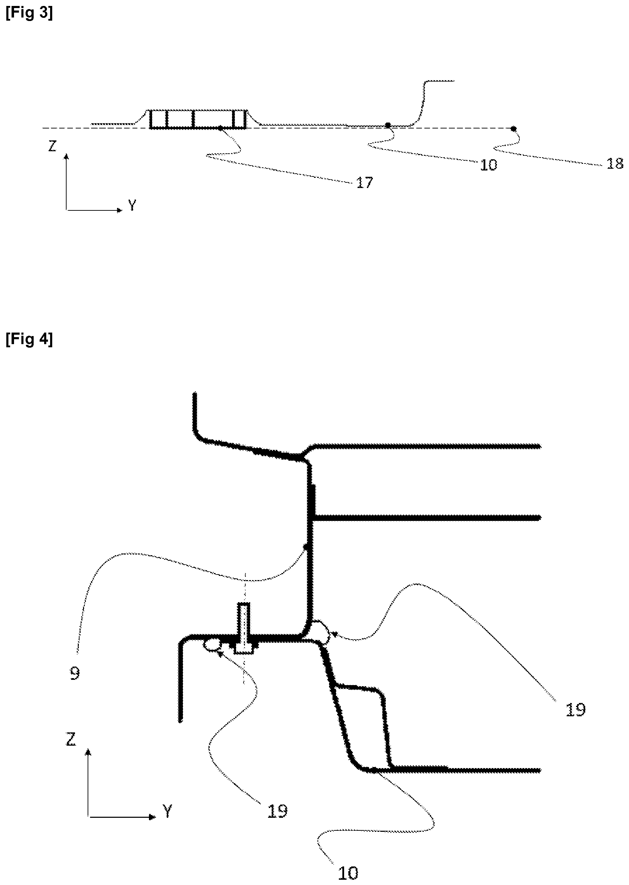

Le module de batterie 4 est donc désormais fixé directement au plancher 1 de la structure du véhicule, ce qui permet d'éloigner selon l'axe Z le module d'une zone à risque et d'une limite énergie 18. Cette limite d'énergie 18 n'est représentée que sur la figure 3. L'expression « directement fixé au plancher 1 » doit se comprendre dans le sens où la face d'appui 5 est plaquée contre la face inférieure 2i de la tôle 2 et en contact sur cette face inférieure 2i. Les axes X, Y, Z sont représentés sur chaque figure et leur définition a déjà été donnée pour la figure 1.

La limite d'énergie 18 est un plan horizontal virtuel que les éléments de la batterie 4, 13, 10 ne doivent pas dépasser sous peine d'être trop rapprochés de la surface de roulage et donc trop sensibles aux chocs provenant de cette surface de roulage. Par exemple cette limite d'énergie 18 correspond à la garde au sol du véhicule si la batterie est l'élément le plus bas du véhicule, mais peuvent être bien entendu dissociées dans le cas contraire.

Comme on le verra par la suite, le module 4 est par exemple retourné « tête en bas », en considérant la tête comme porteuse de bornes de raccordement électrique, de manière à ce que les cellules électrochimiques du module soient en contact avec le plancher 1, c'est-à-dire que la face d'appui 5 ne comprend aucun élément de raccordement électrique. Les références « bas » ou « haut » sont à prendre en corrélation avec les termes « inférieur » et « supérieur » orientant les faces du plancher 1.

Mais en variante, ce module 4 peut aussi être « tête en haut », comme on le verra par la suite.

Ce module 4 comprend par exemple des cellules prismatiques reliées entre elles par des plaquettes de connexions inter cellules. Il est avantageux de placer les cellules en contact avec le moyen de refroidissement 13 via le module 4. Mais cette invention est tout autant applicable pour toutes les autres architectures de module 4, et notamment les cellules cylindriques, ou sous forme de poches.

Idéalement le module 4 est lui-même prismatique mais ce n'est pas obligatoire. La face d'appui 5 sera idéalement plane mais ce n'est pas obligatoire non plus, elle peut être de frome quelconque. Mais si l'on souhaite un échange thermique supplémentaire au moyen de refroidissement 13 en diffusant la chaleur émise par le module 4 au travers du plancher 1, il sera avantageux que cette face d'appui épouse la surface inférieure 2i de la tôle 2. En effet, comme expliqué précédemment, il est avantageux d'insérer la pâte thermique entre la face d'appui 5 et la face inférieure 2i, et pour minimiser la quantité utilisée de cette pâte il est avantageux que la face inférieur 2i soit en correspondance de forme avec la face d'appui 5.

Le moyen de fixation 6, 7 fixant le module 4 de batterie au plancher 1 comprend par exemple une vis (représentée par un trait d'axe 6) traversant un trou du module 4, et dont l'extrémité filetée coopère avec un écrou 7 soudé directement ou indirectement sous le plancher 1 comme illustré sur les figures 1 et 2. Cet écrou 7 est par exemple soudé sur la surface inférieure 2i ou sur une poutre 8.

Mais d'autres moyens de fixation 6, 7 sont possibles en substitution ou en complément. Par exemple on pourra insérer une pâte thermo-conductrice ou un élément déformable thermoconducteur entre la face inférieure 2i et la face d'appui 5, cette pâte ou élément déformable comprenant et/ou étant constitué d'une colle par exemple de type polyuréthane, mais d'autres type de colle sont envisageables. La vis sert alors par exemple de pré maintien du module 4 le temps que la colle se polymérise ou se réticulise, voire la vis n'est pas nécessaire si à la mise en place du module ce module est maintenu en place par un moyen de montage le temps que la colle de polymérise.

Ce plancher 1 comprend une poutre 8 fixée, au moins sur une partie de sa longueur, directement sur la face inférieure 2i.

Cette poutre 8 est par exemple un profilé en tôle d'acier emboutie ayant une section en « V » ou en « U », cette section étant fermée par la face inférieure 2i de la tôle 2. En particulier cette poutre 8 est soudée par points de soudure électrique simples ou doubles sur la face inférieure 2i, mais d'autres moyens de fixation sont envisageables comme des soudures par apport de métal, des rivetages, vissage, collage.

On notera qu'il est avantageux que la poutre 8 soit dans un matériau à base du même métal que le plancher 1, en particulier en acier comme le sont la plupart des structures de véhicules. Cela permet d'éviter d'utiliser des matériaux chers comme l'aluminium tout en apportant une rigidité à la structure bien supérieure à l'aluminium, et en particulier bien supérieure au carter de pack batterie tel que présenté précédemment.

Cette structure comprend par exemple un longeron 9, selon l'axe X, fixé directement sur la face inférieure 2i et formant avec la poutre 8 et la tôle 2 une alvéole logeant le module 4 de batterie.

Ce longeron 9, comme la poutre 8, sera par exemple fixée par soudage par points électrique. Comme pour la poutre 8, ce longeron 9 est par exemple une tôle d'acier emboutie. Ce longeron est, de façon connue, situé à proximité du bas de caisse, selon l'axe X et sur un côté de la caisse, et assure la rigidité longitudinale de la structure.

Cette poutre 8 est par exemple une traverse transversale au longeron 9 et fixée à une de ses extrémités directement au longeron 9, par exemple par soudage.

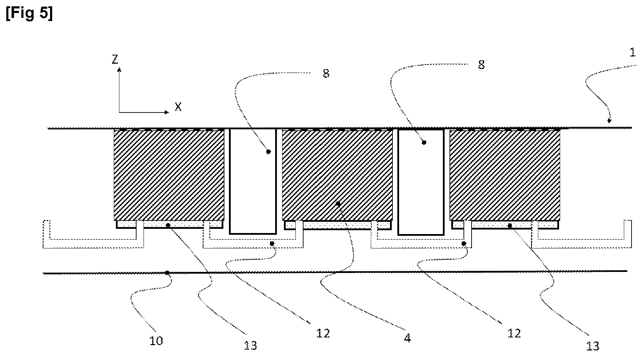

Cette poutre 8 est tout aussi bien transversale que longitudinale. La figure 1 illustre une poutre 8 longitudinale, alors que la figure 5 illustre une poutre 8 transversale.

Les poutres 8 transversales sont avantageusement disposées pour résister aux chocs latéraux au véhicules, alors que la ou les poutres 8 longitudinales sont avantageusement disposées pour résister aux chocs frontaux ou arrières. Cette architecture avantageuse permet de souder ces poutres 8 de renfort directement sur la structure et/ou plancher 1, ce qui à iso inertie de traverse permet une bien meilleure performance pour la résistance aux chocs que le cas du carter du pack batterie précédemment décrit (pack séparé de la structure). Ces poutres 8 participent directement aux renforcement de la structure puisqu'elles sont directement liées aux longerons 9 et au plancher 1. L'efficacité des poutres 8 est améliorée car elles sont fixées à des éléments déjà structurant. Ce nouvel apport de raideur permet d'améliorer l'efficacité global de la structure vis-à-vis des chocs et de réduire la masse des pièces constituantes de la structure.

Cette structure comprend une plaque de carénage 10 distante du moyen de refroidissement 13 et recouvrant ce moyen de refroidissement 13 et une face du module opposée 11 à la face d'appui 5, cette plaque de carénage 10 étant fixée directement ou indirectement au plancher 1 de façon étanche.

Cette étanchéité se comprend, dans tout le texte de ce document, comme étant une étanchéité d'un espace interne compris entre le plancher 1 et la plaque de carénage 10 vis-à-vis des agressions extérieures au module 4, par exemple des projections d'eau ou de boue, mais aussi vis-à-vis de gaz toxiques pouvant être émis par le module 4, tant que ce gaz ne dépasse pas une pression seuil prédéterminée et/ou une température seuil prédéterminée.

La distance entre la plaque de carénage 10 et le moyen de refroidissement 13 permet à la plaque de carénage 10 de se déformer en cas de choc, sans venir impacter le moyen de refroidissement 13 et/ou le module 4. Ainsi les chocs sont absorbés. Plus cette distance est grande, moins la conception de cette plaque de carénage 10 est contrainte. Le fait que le plancher 1 remplace le couvercle des carters de pack batterie habituels permet d'augmenter cette distance tout en restant sous la limite d'énergie 18.

En outre, le module 4 étant fixé directement au plancher 1 qui frome lui-même une structure rigide, cela permet d'alléger la plaque de carénage 10 puisque, contrairement à l'art antérieur, cette plaque n'a plus à supporter le poids des modules 4, chaque module pouvant dépasser les 13 Kg, voire les 60 Kg, la tendance actuelle étant une nette augmentation du poids du module 4.

Par exemple, cette plaque de carénage 10 comprend:
- un enfoncement sur une face inférieure de la plaque de carénage 10, et
- une goulotte 17 de guidage de faisceaux et/ou de conduites logée dans cet enfoncement.

Cette goulotte 17, représentée sur les figures 2 et 3, est par exemple une goulotte 17 ayant une section en forme de « U » dont les extrémités des branches du « U » sont fixées à la plaque de carénage, par exemple par vissage, rivetage, clipage, cette fixation étant agencée de sorte à conserver l'étanchéité de la plaque de carénage 10 et donc de l'espace interne. Cette section peut comprendre en outre une ou plusieurs cloisons longitudinales de sorte à séparer les types différents de faisceaux ou conduites, notamment un faisceau de commande ou de communication d'un faisceau de courant de puissance. Cette goulotte 17 est orientée par exemple longitudinalement selon l'axe X, et/ou transversalement selon l'axe Y. Cette goulotte 17, et par conséquent l'enfoncement, sont par exemple en vis-à-vis de la poutre 8, de sorte à ne pas diminuer la distance entre la plaque de carénage 10 et le moyen de refroidissement 13 et/ou le module 4. Cette goulotte 17 est par exemple en matière plastique, ou en matériau conducteur, par exemple en acier, si l'on sépare les types différents de faisceaux ou conduites, notamment le faisceau de commande ou de communication du faisceau de courant de puissance, pour des raisons de perturbations électromagnétiques.

Par exemple, cette plaque de carénage 10 est fixée directement sur une face inférieure de la poutre 8, ce qui permet des points de fixation en partie centrale de la plaque de carénage 10. Cette fixation est par exemple un assemblage vissé, étanche, de sorte que la plaque de carénage puisse être démontée pour maintenance des modules 4. Ainsi la structure apporte sa rigidité à la plaque de carénage 10, cette dernière pouvant être ainsi amincie.

Alternativement ou en combinaison, cette plaque de carénage 10 est fixée directement sur une face inférieure 9i du longeron 9. Cette fixation est par exemple un assemblage vissé, étanche, de sorte que la plaque de carénage puisse être démontée pour maintenance des modules 4.

La figure 4 illustre en particulier cet assemblage vissé, la vis (sans signe) plaquant la plaque de carénage 10 contre le longeron 9 tout en écrasant une colle ou joint d'étanchéité, et créant ainsi des bourrelets 19 de colle ou de joint de chaque côté de de cet assemblage vissé. L'étanchéité est ainsi assurée, et visuellement contrôlable par la régularité du bourrelet 19.

En variante non illustrée, le moyen de fixation 6, 7 fixant le module 4 de batterie au plancher 1 peut être commun à la fixation de la plaque de carénage 10 et/ou au moyen de refroidissement 13. Par exemple une même vis traverse le module 4 et/ou le moyen de refroidissement et/ou la plaque de carénage 10 et se visse sur le plancher 1. Par exemple, le module 4 comprend une oreille trouée insérée entre la plaque de carénage 10 et la face inférieure de la poutre 8 ou la face inférieure 9i du longeron 9, la vis traversant l'oreille par son trou, et la plaque de carénage 10, et/ou de même pour le moyen de refroidissement 13. Cette disposition a l'avantage d'économiser un nombre de vis important, et peut être complétée ou combinée avec la colle entre ces trois éléments (module 4, moyen de refroidissement 13, plaque de carénage 10).

Cette structure comprend par exemple deux longerons 9 parallèles, la poutre 8, la tôle 2 et la plaque de carénage 10, cet ensemble délimitant l'espace interne étanche logeant le module 4 et le moyen de refroidissement 13.

La poutre 8 comprend par exemple un premier passage étanche d'un faisceau électrique ou d'une conduite.

Ce faisceau électrique comprend par exemple des barres omnibus raccordé à une borne du module 4, et/ou un faisceau de réseau de communication pour le pilotage de la charge ou décharge du module 4, et/ou un faisceau de capteurs du module 4. La conduite est par exemple une conduite de fluide caloporteur pour refroidir le module 4 en alimentant le moyen de refroidissement 13. L'étanchéité concerne toujours celle de l'espace interne.

Alternativement ou en combinaison, la plaque de carénage 1 comprend un second passage étanche 14, 15 du faisceau électrique ou de la conduite.

En particulier la figure 2 illustre cette plaque de carénage 10 comprenant un bord relevé dont l'extrémité est fixée au plancher 1, ce bord relevé comprenant ce second passage étanche 14, 15. Le second passage étanche 14 est par exemple dédié aux faisceaux électriques, alors que le second passage étanche 15 est dédié au conduites de fluides. Ces seconds passages étanches 14, 15 peuvent être portés par une platine qui elle-même est fixée sur le bord relevé de la plaque de carénage 10.

Ainsi dans tous les cas, ce faisceau électrique et/ou la conduite ne dépasse pas de la limite d'énergie 18.

Par exemple le module 4 comprend une borne de raccordement électrique en retrait par rapport à la face du module opposée 11, de sorte que la borne de raccordement ne dépasse pas de la face du module opposée 11 et reste éloignée de la plaque de carénage 10.

Cette disposition correspond au montage du module 4 « tête en bas » précédemment décrit, illustré par la figure 5, même si les bornes ne sont pas représentées.

Selon une variante de l'invention, non illustrée, la borne de raccordement électrique est en retrait de la face d'appui 5. Ainsi le module 4 est monté « tête en haut », et la face du module opposée 11 est ainsi libérée de tout obstacle à l'échange thermique par conduction avec le moyen de refroidissement 13. Le retrait de la borne électrique permet que celle-ci ne soit pas en contact avec le plancher 1 et en particulier la face inférieure 2i, la barre omnibus 12 ou le faisceau se raccordant à cette borne étant orienté par exemple parallèlement à la face inférieure 2i à proximité de la borne électrique.

Cette structure comprend par exemple deux modules 4 et une barre omnibus 12, cette barre omnibus 12 ayant une forme d'arche reliant électriquement une borne de raccordement du premier module 4 à une borne de raccordement du deuxième module 4 tout en chevauchant la poutre 8.

Cette disposition, illustrée par la figure 5, permet de ne pas altérer le moment d'inertie des poutres 8, nommé également moment quadratique, qui donc gardent leur rigidité originelle.

Bien entendu les extrémités de ces arches auront une forme adaptée au type de montage « tête en haut » ou « tête en bas », éventuellement en contournant les moyens de refroidissement 13 ou en adaptant les moyens de refroidissement 13, par exemple en adaptant leur longueur et/ou largeur.

Par exemple, la poutre 8 est creuse et comprend une ouverture débouchant dans ce creux, le module 4 comprenant un système de sécurité de dégazage en cas d'emballement thermique d'une cellule du module 4, ce système étant agencé de sorte à diriger le gaz chaud dans le creux de la poutre 8, au travers de l'ouverture.

De tels systèmes de sécurité sont connus en tant que tel. Il existe plusieurs technologies, par exemple une membrane fusible au-delà d'un seuil de température et adhérisée autour d'une ouverture pratiquée au travers du module, et masquant cette ouverture. Ou encore une soupape poussée par un ressort et masquant cette même ouverture. De tels systèmes de sécurité sont parfois combinés avec des systèmes de respiration des modules, cette respiration n'étant là que pour compenser une dilatation ou contraction normale des gaz. Dans tous les cas d'emballement thermique d'une cellule, le gaz chaud généré sera évacué du module 4, et il est alors avantageux de diriger ce gaz chaud dans le creux de la poutre 8, au travers de l'ouverture de la poutre 8. Ainsi cette poutre 8 sert de canal de guidage des gaz pour les évacuer hors de l'espace interne. On notera que, en situation nominale et pour conserver l'étanchéité de l'espace interne, la poutre 8 doit elle-même être étanche et par conséquent, l'ouverture de la poutre 8 sera idéalement obturée par une membrane fusible, par exemple de même nature que la membrane fusible du système de sécurité, ou par tout autre moyen configuré de sorte à libérer l'ouverture de la poutre 8 si le moyen de sécurité dirige les gaz chauds vers cette ouverture de poutre 8.

Ce moyen de refroidissement 13 est par exemple une plaque de refroidissement plaquée sur le module 4.

Par exemple, cette plaque de refroidissement comprend deux parois définissant entre-elles un volume de circulation d'un fluide caloporteur, l'une de ces parois étant plaquée contre le module 4.

Ce volume fait par exemple partie d'un circuit de refroidissement du module 4. Ce circuit comprend en outre une pompe de circulation, un échangeur, éventuellement un réchauffeur, et un vase d'expansion lorsque ce fluide est par exemple sous forme liquide, ainsi qu'une conduite de circulation du fluide reliant en boucle fermée l'ensemble des éléments précités. Cette circulation du fluide, par exemple de l'eau glycolée, se fait par l'actionnement de la pompe de circulation.

Les deux parois sont par exemple deux tôles soudées l'une à l'autre, ou collées. La première tôle est par exemple plane et plaquée sur le module 4, et la seconde est emboutie avec une forme de façon à constituer un canal parcouru par le fluide et décrivant un serpentin.

Avantageusement ce serpentin sera uniformément réparti sur toute la face du module opposée 11.

La première tôle comprend par exemple un trou traversé par une vis fixant la plaque de refroidissement sur le module 4. Mais d'autres moyens de fixation sont possibles en substitution ou en complément. Par exemple on pourra insérer une pâte thermo-conductrice ou un élément déformable thermoconducteur entre la plaque de refroidissement et la face opposée 11 du module 4, cette pâte ou élément déformable comprenant et/ou étant constitué d'une colle par exemple de type polyuréthane, mais d'autres type de colle sont envisageables. La vis sert alors par exemple de pré maintien de la plaque de refroidissement sur le module 4, le temps que la colle se polymérise ou se réticulise, voire la vis n'est pas nécessaire si à la mise en place de cette plaque, elle est maintenue en place par un moyen de montage le temps que la colle de polymérise, comme pour le moyen de fixation 6, 7 fixant le module 4 de batterie au plancher 1.

Par exemple la tôle 2 comprend un revêtement thermiquement isolant recouvrant la face inférieure 2i.

Ce revêtement est par exemple une peinture intumescente, un revêtement à base de fibre de verre ou de carbone, la fibre de verre ayant l'avantage d'être électriquement isolante. Ainsi même en cas d'emballement thermique de l'une des cellules du module 4, l'habitacle 3 du véhicule reste protégé contre les risques d'incendie.

## Revendications

1. Structure de véhicule automobile comprenant :
- un plancher (1) comprenant une tôle (2) ayant une face inférieure (2i), et une face opposée supérieure (2s) destinée à être orientée vers un habitacle (3) du véhicule,
- un module (4) de batterie pour le stockage d'énergie électrique comprenant une face d'appui (5),
- un moyen de refroidissement (13) du module (4), ce module (4) est positionné entre la face inférieure (2i) et ce moyen de refroidissement (13), cette structure comprend un moyen de fixation (6, 7) fixant le module (4) de batterie au plancher (1), **caractérisé en ce que** la face d'appui (5) est plaquée contre la face inférieure (2i) de la tôle (2) et en contact sur cette face inférieure (2i).

2. Structure de véhicule automobile selon la revendication 1, ce plancher (1) comprenant une poutre (8) fixée, au moins sur une partie de sa longueur, directement sur la face inférieure (2i).

3. Structure de véhicule automobile selon la revendication 2, comprenant un longeron (9) fixé directement sur la face inférieure (2i) et formant avec la poutre (8) et la tôle (2) une alvéole logeant le module (4) de batterie.

4. Structure de véhicule selon la revendication 3, la poutre (8) étant une traverse transversale au longeron (9) et fixée à une de ses extrémités directement au longeron (9).

5. Structure de véhicule selon l'une des revendications précédentes, comprenant une plaque de carénage (10) distante du moyen de refroidissement (13) et recouvrant ce moyen de refroidissement (13) et une face du module opposée (11) à la face d'appui (5), cette plaque de carénage (10) étant fixée directement ou indirectement au plancher (1) de façon étanche.

6. Structure de véhicule selon la revendication 5, la plaque de carénage (10) comprenant :
- un enfoncement sur une face inférieure de la plaque de carénage (10), et
- une goulotte (17) de guidage de faisceaux et/ou de conduites logée dans cet enfoncement.

7. Structure de véhicule selon l'une des revendications précédentes en combinaison avec la revendication 2, comprenant deux modules (4) et une barre omnibus (12), cette barre omnibus (12) ayant une forme d'arche reliant électriquement une borne de raccordement du premier module (4) à une borne de raccordement du deuxième module (4) tout en chevauchant la poutre (8).

8. Structure de véhicule selon l'une des revendications précédentes en combinaison avec la revendication 2, la poutre (8) étant creuse et comprenant une ouverture débouchant dans ce creux, le module (4) comprenant un système de sécurité de dégazage en cas d'emballement thermique d'une cellule du module (4), ce système étant agencé de sorte à diriger le gaz chaud dans le creux de la poutre (8), au travers de l'ouverture.

9. Structure de véhicule selon l'une des revendications précédentes, le moyen de refroidissement (13) étant une plaque de refroidissement plaquée sur le module (4).

10. Structure de véhicule automobile selon l'une des revendications précédentes, la tôle (2) comprenant un revêtement thermiquement isolant recouvrant la face inférieure (2i).

## Patentansprüche

1. Fahrzeugstruktur mit
- einem Boden (1), der ein Blech (2) mit einer Unterseite (2i) und einer gegenüberliegenden Oberseite (2s) aufweist, die zu einem Fahrgastraum (3) des Fahrzeugs gerichtet ist,
- einem Batteriemodul (4) zum Speichern elektrischer Energie, das eine Auflagefläche (5) aufweist,
- einer Kühleinrichtung (13) des Moduls (4),
wobei das Modul (4) zwischen der Unterseite (2i) und der Kühleinrichtung (13) angeordnet ist, wobei die Struktur eine Befestigungseinrichtung (6, 7) aufweist, die das Batteriemodul (4) an dem Boden befestigt (1), **dadurch gekennzeichnet, dass** die Auflagefläche (5) an der Unterseite (2i) des Blechs (2) anliegt und diese Unterseite (2i) berührt.

2. Fahrzeugstruktur nach Anspruch 1, wobei der Boden (1) einen Balken (8) umfasst, der zumindest über einen Teil seiner Länge direkt an der Unterseite (2i) befestigt ist.

3. Fahrzeugstruktur nach Anspruch 2, umfassend einen Längsträger (9), der direkt an der Unterseite (2i) befestigt ist und zusammen mit dem Balken (8) und dem Blech (2) eine Vertiefung bildet, die das Batteriemodul (4) aufnimmt.

4. Fahrzeugstruktur nach Anspruch 3, wobei der Träger (8) ein Querträger quer zum Längsträger (9) ist und an einem seiner Enden direkt am Längsträger (9) befestigt ist.

5. Fahrzeugstruktur nach einem der vorhergehenden Ansprüche, mit einer Verkleidungsplatte (10), die von der Kühleinrichtung (13) beabstandet ist und die Kühleinrichtung (13) abdeckt, und einer der Auflagefläche (5) gegenüberliegenden Seite des Moduls (11), wobei die Verkleidungsplatte (10) direkt oder indirekt dicht am Boden (1) befestigt ist.

6. Fahrzeugstruktur nach Anspruch 5, wobei die Verkleidungsplatte (10) aufweist:
- eine Vertiefung auf einer Unterseite der Verkleidungsplatte (10) und
- eine in dieser Vertiefung aufgenommene Führungsrinne (17) für Bündel und/oder Leitungen.

7. Fahrzeugstruktur nach einem der vorhergehenden Ansprüche in Kombination mit Anspruch 2, die zwei Module (4) und eine Sammelschiene (12) umfasst, wobei die Sammelschiene (12) eine Bogenform aufweist, die einen Verbindungsanschluss des ersten Moduls (4) mit einem Verbindungsanschluss des zweiten Moduls (4) elektrisch verbindet, während sie den Balken (8) überlappt.

8. Fahrzeugstruktur nach einem der vorhergehenden Ansprüche in Kombination mit Anspruch 2, wobei der Balken (8) hohl ist und eine Öffnung aufweist, die in diese Ausnehmung mündet, wobei das Modul (4) ein Entgasungssicherheitssystem für den Fall des thermischen Verpackens einer Zelle des Moduls (4) aufweist, wobei dieses System so angeordnet ist, dass es Heißgas durch die Öffnung in die Ausnehmung des Balkens (8) leitet.

9. Fahrzeugstruktur nach einem der vorhergehenden Ansprüche, wobei das Kühlmittel (13) eine auf das Modul (4) aufgebrachte Kühlplatte ist.

10. Fahrzeugstruktur nach einem der vorhergehenden Ansprüche, wobei das Blech (2) eine die Unterseite (2i) abdeckende wärmeisolierende Beschichtung aufweist.

## Claims

1. Vehicle structure comprising:
- a floor (1) comprising a sheet metal (2) having a lower face (2 i), and an upper opposite face (2 s) intended to be orientated towards a passenger compartment (3) of the vehicle,
- a battery module (4) for the electrical energy storage comprising a bearing face (5),
- a cooling means (13) of the module (4),
this module (4) is positioned between the lower face (2 i) and this cooling means (13), this structure comprises a fixing means (6, 7) fixing the battery module (4) to the floor (1), wherein the bearing face (5) is pressed against the lower face (2 i) of the sheet metal (2) and in contact with this lower face (2 i).

2. Vehicle structure according to claim 1, said floor (1) comprising a beam (8) fixed, at least over part of its length, directly to the lower face (2 i).

3. Vehicle structure according to claim 2, comprising a spar (9) fixed directly to the lower face (2i) and forming with the beam (8) and the sheet metal (2) an alveolus housing the battery module (4).

4. Vehicle structure according to claim 3, the beam (8) being a cross-member transverse to the spar (9) and fixed at one of its ends directly to the spar (9).

5. Vehicle structure according to one of the previous claims, comprising a fairing plate (10) remote from the cooling means (13) and covering said cooling means (13) and a face of the module opposite (11) to the bearing face (5), said fairing plate (10) being fixed directly or indirectly to the floor (1) in a sealed manner.

6. Vehicle structure according to claim 5, the fairing plate (10) comprising:
- a depression on a lower face of the fairing plate (10), and
- a chute (17) for guiding bundles and/or pipes housed in this depression.

7. Vehicle structure according to claim 2, comprising two previous modules (4) and a bus bar (12), said bus bar (12) having an arch shape electrically connecting a connection terminal of the first combination module (4) to a connection terminal of the second bus bar (4) while overlapping the beam (8).

8. Vehicle structure according to one of the previous claims in combination with claim 2, the beam (8) being hollow and comprising an opening opening opening into this hollow, the module (4) comprising a degassing safety system in the event of thermal runaway of a cell of the module (4), this system being arranged so as to direct the hot gas into the hollow of the beam (8), through the opening.

9. Vehicle structure according to one of the previous claims, the cooling means (13) being a cooling plate pressed against the module (4).

10. Vehicle structure according to one of the previous claims, the metal sheet (2) comprising a thermally insulating covering covering the lower face (2i).
